# EUROPEAN PATENT APPLICATION

(11) **EP 2 579 145 A2**
(43) Date of publication of application: **10.04.2013**
(21) Application number: 12182742.2
(22) Date of filing: 03.09.2012
(51) Int. Cl.: G06F 3/0488, G06F 1/32

(54) **Accessory to improve user experience with an electronic display**

(30) Priority: 06.10.2011 US 201113267881
(71) Applicant: Sony Mobile Communications AB, 221 88 Lund (SE)
(72) Inventor: Masuda, Takefumi, 221 88 Lund (SE); Okuda, Tetsuya, Redwood City, CA California 94065 (US); Subba, Chandrashekar, Redwood City, CA California 94065 (US)
(74) Representative: HOFFMANN EITLE

(57) **Abstract**

Embodiments of the invention are directed to systems, methods and computer program products for determining positional data associated with a hand or a finger that interacts with a touch panel device. In some embodiments, a method includes determining, with respect to a touch panel device, positional data associated with a user's first hand that interacts with the touch panel device. Additionally, the method includes creating an image of the user's first hand using the positional data. Additionally, the method includes transmitting the image of the user's first hand to a display device. Additionally, the method includes presenting the image of the user's hand on the display device. Additionally, the method includes identifying a finger of the user's first hand based at least partially on the determining, with respect to a touch panel device, positional data associated with a user's first hand that interacts with the touch panel device.

## Description

### BACKGROUND

A touch pad or a touch panel allows a user to interact with an electronic device using the user's fingers. Therefore, a touch pad or a touch panel allows a user to bypass other traditional input devices such as a keyboard, a mouse, etc. With the worldwide explosion in the popularity and sales of touch panel electronic devices, there is a need to improve the functionality of a touch pad or a touch panel.

### BRIEF SUMMARY

In some embodiments, an exemplary method of the invention comprises determining, with respect to a touch panel device, positional data associated with a user's first hand that interacts with the touch panel device; creating an image of the user's first hand using the positional data; and transmitting the image of the user's first hand to a display device, wherein the display device is separate from the touch panel device, wherein the image of the user's first hand is presented on the display device, and wherein the image of the user's first hand overlaps other visual information presented on the display device.

In some embodiments, the method additionally comprises determining whether the user's first hand is a right hand or a left hand based on the determining positional data associated with the user's first hand that interacts with the touch panel device. In some embodiments, the method additionally comprises determining, with respect to the touch panel device, positional data associated with the user's second hand that interacts with the touch panel device. In some embodiments, the method additionally comprises identifying a finger of the user's first hand or the user's second hand based on the determining positional data associated with the user's first hand and the determining positional data associated with the user's second hand. In some embodiments, the method additionally comprises performing a function associated with the touch panel device based on the identifying a finger of the user's first hand or the user's second hand.

In some embodiments, the determining positional data associated with the user's first hand and the determining positional data associated with the user's second hand are executed using one or more sensors or one or more image capturing components associated with the touch panel device, wherein the touch panel device includes a display and a frame, and wherein one or more sensors sense interactions associated with the display and the frame. In some embodiments, the user's first hand interacts with the touch panel device when the user performs at least one of: touching the touch panel device using the user's first hand, bringing the user's first hand in close proximity to the touch panel device, or grabbing the touch panel device using the user's first hand, wherein grabbing comprises touching at least a part of a front surface of the touch panel device using the user's first hand and touching at least a part of a back surface of the touch panel device using the user's first hand.

In some embodiments, the transmitting further comprises transmitting a continuous stream of images of the user's first hand, and wherein the presenting comprises presenting the continuous stream of images in real-time or near real-time. In some embodiments, the identifying further comprises identifying a part of the finger, wherein the identified part is at least one of: a top portion of the finger, a middle portion of the finger, or a bottom portion of the finger. In some embodiments, the identifying step is based on a probabilistic or statistical model such that the identification is made if a processor associated with the touch panel device can identify the finger with greater than a predetermined threshold of statistical confidence.

In some embodiments, the identifying is based at least partially on predetermined kinematic data or on data input (may also be referred to as personal data) by the user. In some embodiments, the amount of kinematic data and/or the amount of personal data that is used in the identifying step can be adaptively reduced (e.g., by the user or by the touch panel device itself) to save power associated with an energy source located in the touch panel device.

In some embodiments, the method additionally comprises disabling the determining positional data step when the amount of determined positional data is greater than a predetermined threshold amount of positional data. In some embodiments, the determining positional data step further comprises determining positional data associated with the user's first hand in response to one or more triggering events. Additionally, in some embodiments, the number and type of triggering events used by the touch panel device may depend on the amount of remaining power associated with an energy source located in the touch panel device. For instance, a fewer number of triggering events (and/or less complex triggering events that require less processing power) may be used by the touch panel device when the amount of remaining power in the energy source decreases. As a further example, a greater number of triggering events (and/or more complex triggering events that require more processing power) may be used by the touch panel device when the amount of remaining power in the energy source increases.

In some embodiments, the identifying is based at least partially on a software application that is executed on the touch panel device. In some embodiments, the identifying is based at least partially on a probability map associated with the touch panel device. In some embodiments, the identifying is based at least partially on at least one of an orientation of the touch panel device or dimensions associated with the touch panel device. In some embodiments, the identifying is based at least partially on a ring associated with the finger.

In some embodiments, the method further comprises determining, using a sensor associated with the touch panel device, a pressure associated with an interaction, with the touch panel device, of a finger of the user's first hand; and in response to determining the pressure associated with the interaction is greater than a threshold pressure, registering a touch event. Additionally, the method further comprises, in response to determining the pressure associated with the interaction is not greater than the threshold pressure, not registering a touch event.

In some embodiments, the positional data includes positional data along the x-axis, the y-axis, and the z-axis with respect to the touch panel device surface. In some embodiments, the method additionally includes determining an amount of energy remaining in a power source associated with the touch panel device, wherein the amount of positional data determined by the touch panel device is based partially on the amount of energy remaining in the power source.

An exemplary system of the invention comprises a touch panel device that comprises a memory and a processor. The system further comprises a module stored in the memory, executable by the processor, and configured to: determine, with respect to the touch panel device, positional data associated with a user's first hand that interacts with the touch panel device; and transmit the positional data to the display device; wherein an image of the user's first hand is created at the display device using the positional data, wherein the display device is separate from the touch panel device, wherein the image of the user's first hand is presented on the display device, and wherein the image of the user's first hand overlaps other visual information presented on the display device.

An exemplary computer program product comprises a non-transitory medium comprising a set of codes that cause a computer to: determine, with respect to a touch panel device, positional data associated with a user's first hand that interacts with the touch panel device; create an image of the user's first hand using the positional data; and transmit the image of the user's first hand to a display device, wherein the display device is separate from the touch panel device, wherein the image of the user's first hand is presented on the display device, and wherein the image of the user's first hand overlaps other visual information presented on the display device.

### BRIEF DESCRIPTION OF THE DRAWINGS

Having thus described embodiments of the invention in general terms, reference will now be made to the accompanying drawings, where:
Figure 1 is a diagram of an embodiment of a system environment for presenting, on a display device, an image of a user's interaction with a touch panel device, in accordance with embodiments of the present invention;
Figure 2 is a diagram of an embodiment presenting a user's interaction with a touch panel device, in accordance with embodiments of the present invention;
Figure 3 is a diagram of an embodiment of a touch panel device, in accordance with embodiments of the present invention;
Figure 4 is a diagram of another embodiment presenting a user's interaction with a touch panel device, in accordance with embodiments of the present invention;
Figure 5 is a diagram of another embodiment presenting a user's interaction with a touch panel device, in accordance with embodiments of the present invention;
Figure 6 is a diagram of another embodiment presenting a user's interaction with a touch panel device, in accordance with embodiments of the present invention;
Figure 7 is a diagram of another embodiment presenting a user's interaction with a touch panel device, in accordance with embodiments of the present invention;
Figure 8 is a diagram of another embodiment presenting a user's interaction with a touch panel device, in accordance with embodiments of the present invention;
Figure 9 is a diagram of another embodiment presenting a user's interaction with a touch panel device, in accordance with embodiments of the present invention;
Figure 10 is a diagram of a probability map associated with a display of a touch panel device, in accordance with embodiments of the present invention;
Figure 11 is a flowchart illustrating a general process flow for determining positional data associated with a hand that interacts with a touch panel device, in accordance with embodiments of the present invention;
Figure 12 is an exemplary touch panel device, in accordance with embodiments of the present invention;
Figure 13 is a diagram illustrating a rear view of exemplary external components of the touch panel device depicted in Figure 12, in accordance with embodiments of the present invention;
Figure 14 is a diagram illustrating exemplary internal components of the touch panel device depicted in Figure 12, in accordance with embodiments of the present invention;
Figure 15 is an exemplary touch panel device with a pressure sensing mechanism, in accordance with embodiments of the present invention; and
Figure 16 is an exemplary touch panel device with a pressure sensing mechanism, in accordance with embodiments of the present invention.

### DETAILED DESCRIPTION OF EMBODIMENTS OF THE INVENTION

Embodiments of the present invention now may be described more fully hereinafter with reference to the accompanying drawings, in which some, but not all, embodiments of the invention are shown. Indeed, the invention may be embodied in many different forms and should not be construed as limited to the embodiments set forth herein; rather, these embodiments are provided so that this disclosure may satisfy applicable legal requirements. Like numbers refer to like elements throughout.

Embodiments of the invention are directed to systems, methods and computer program products for determining positional data associated with a hand or a finger that interacts with a touch panel device. As used herein, a touch panel device is an electronic device that allows a user to input the user's instructions using a touch panel that is part of the electronic device or is in communication with the electronic device. In some embodiments, a method includes determining, with respect to a touch panel device, positional data associated with a user's first hand that interacts with the touch panel device. Additionally, the method includes creating an image of the user's first hand using the positional data. Additionally, the method includes transmitting the image of the user's first hand, via a transmission mechanism, to a display device. Additionally, the method includes presenting the image of the user's hand on the display device. In some embodiments, the method additionally includes, determining, with respect to the touch panel device, positional data associated with the user's second hand that interacts with the touch panel device either independently of or based at least partially on the determining, with respect to a touch panel device, positional data associated with a user's first hand that interacts with the touch panel device. Additionally, in some embodiments, the method additionally includes identifying a finger of the user's first hand or the user's second hand based at least partially on the determining, with respect to a touch panel device, positional data associated with a user's first hand that interacts with the touch panel device and the determining, with respect to the touch panel device, positional data associated with the user's second hand that interacts with the touch panel device. In some embodiments, the process of identifying a particular hand (e.g., right hand or left hand) or a particular finger of a particular hand is based on a probabilistic or statistical model such that the identification is made if a processor associated with the touch panel device can identify the finger with greater than a predetermined threshold of statistical confidence.

One of the goals of this invention is to provide better visual feedback to a user who is interacting with a touch panel device and/or a display device, where the display device may be part of the touch panel device, or is a separate unit that is in wireless or wired communication with the touch panel device. Another goal of this invention is to provide an operating system (e.g., a mobile device operation system) with more than one input context for a touch panel device. With current operating systems, the input context associated with a mouse is limited to two input contexts, i.e., a left mouse click is assigned a different meaning when compared to a right mouse click. With current operating systems that allow a user to interact with a touch panel device or a touch pad device, the operating systems do not distinguish between different types of touch, e.g., the interaction (with the touch panel device) of the index finger versus the thumb, the interaction (with the touch panel device) of various parts of the right hands versus various parts of the left hand, etc. The term "interaction" is explained in the further detail below. The invention describes herein provides more than one input context when a user interacts with a touch panel device or a touch pad device. For example, when a touch panel device detects the touch of a user's left hand (or detects that that the user's left hand is in close proximity to the touch panel), the touch panel device attaches different functional meanings to interactions of various parts of the user's left hand with the touch panel device. These functional meanings may be different from the functional meanings attached to interactions of various parts of the user's right hand with the touch panel device. As a further example, when the touch panel device detects the touch of a user's right thumb (or detects that that the user's right thumb is in close proximity to the touch panel), the touch panel device attaches a particular functional meaning to this interaction. This functional meaning may be different from the functional meaning attached to interactions of the user's left thumb or right index finger with the touch panel device. As used herein, a touch panel device may be referred to as a type of accessory or a type of electronic accessory.

As used herein, touch panel devices allows a user to interact with visual information on a touch panel display using the user's hand/fingers/arm movements. In some embodiments, these movements include touching the touch panel display, while in other embodiments, these movements can occur away from the touch panel display and do not have to include touching the touch panel display. As used herein, a touch pad device may replace a touch panel device in any of embodiments of the invention. A touch pad device does not display visual information on the touch pad device surface, but allows a user to interact with the touch pad device surface using the user's hand/fingers/arm movements. In some embodiments, these movements include touching the touch pad device surface, while in other embodiments, these movements can occur away from the touch pad device surface and do not have to include touching the touch pad device surface.

In some embodiments, the touch panel device may enable a proximity sensing feature of the touch panel (e.g., a capacitive touch panel) to locate and identify fingers that are in close proximity to the touch panel, but that do not touch the touch panel. In other embodiments, the touch panel device may have sensors located on the edge and/or back surface of the touch panel device so that the touch panel device can speculate or determine which hand (i.e., left or right) is being used by the user in interacting with the touch panel display. For example, if the user is grabbing the left edge of the touch panel device in landscape mode, in combination with information obtained from one or more gravity sensors (e.g., accelerometers), the touch panel device can guess/predict/speculate/determine which hand is grabbing the left edge of the touch panel device and which hand is interacting with the touch panel device display. As described below, in some embodiments, the action of grabbing the touch panel device may be different from the action of touching the touch panel device. In still other embodiments, the touch panel device uses a kinematic model or other predetermined knowledge (such as information that the distance between two fingers on one hand cannot exceed a certain distance) to identify the fingers that are interacting with the touch panel device display. As used herein, kinematic information refers to information associated with the motion of the user's hands, fingers, arms, or any other movement or motion information that can be detected by motion sensors or accelerometers located in the touch panel device.

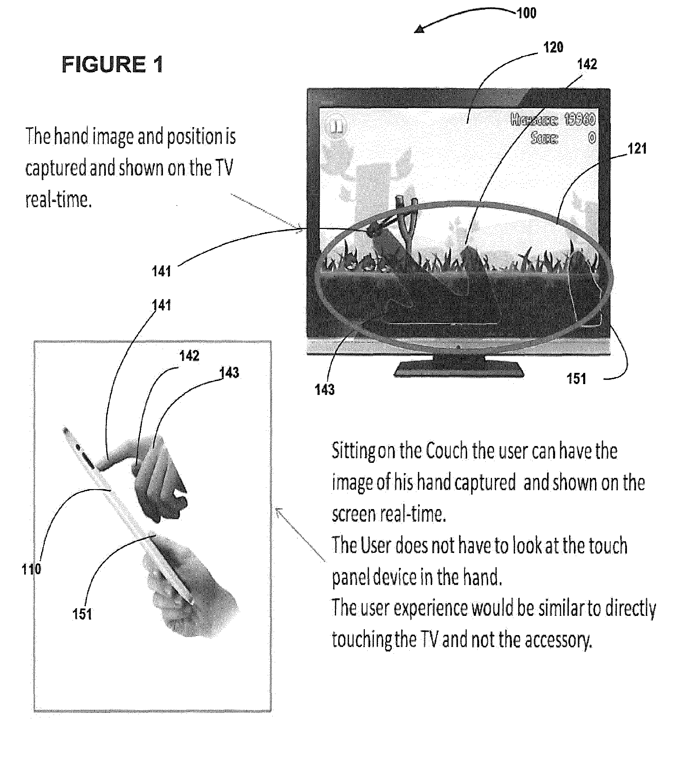

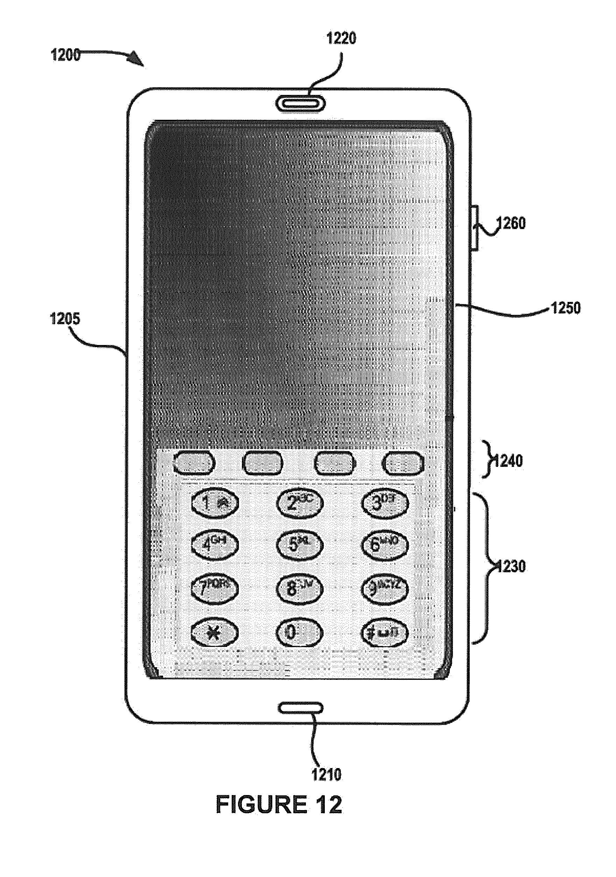

Referring now to Figure 1, Figure 1 presents a system environment **100** that includes a touch panel electronic device **110**. In some embodiments, the touch panel device **110** may itself include a display **220,** while in other embodiments, a display device **120** is separately provided. In other embodiments, the touch panel device **110** may itself include a display **220,** and a separate display device **120** may be additionally or alternatively provided that also presents the visual information displayed on the touch panel's display **220.** This touch panel device **110** is portable and the touch panel electronic device **110** may interact with one or more other electronic devices using one or more communication mechanisms. For example, the touch panel device **110** may interact with a display device **120** such as a television device as presented in Figure 1. In some embodiments, the touch panel device **110** may be a touch pad device such that visual information is not presented on the touch pad device and visual information is presented only on the separate display device **120** that is in wireless or wired communication with the touch pad device. As referred to herein, a touch panel device **110** also includes a touch pad device. In some embodiments, the display dimensions of the display device **120** are greater than the display dimensions of the touch panel device **110;** therefore, the visual information presented on the display device **120** appears much larger than the visual information presented on the touch panel device **110.** Exemplary short-range wireless mechanisms for communications between the touch panel device **110** and the display device **120** include near-field communication (NFC), infra-red transmission (IR), Bluetooth, short-range radio frequency (RF) signals, IEEE 802.11x, WiFi, wireless universal serial bus (USB), HomeRF, IrDA-based (Infrared Data Association) transmission, etc. The touch panel device **110** may be a portable mobile communication device (or may be part of a portable mobile communication device) as described in Figures 12, 13, and 14.

The user may interact with the touch panel device **110** using the user's fingers. For example, the user may touch the touch panel device **110** with the user's finger to select an option, icon, menu, etc. Alternatively, the user may bring the user's finger (of either hand) close to the touch panel device **110,** but not touch the touch panel device **110,** in order to select an option, icon, menu, etc. In still other embodiments, the user may touch the touch panel device **110** with more than one finger simultaneously, e.g., the user may touch the touch panel device **110** with one finger (e.g., index finger) of one hand and simultaneously touch the touch panel device **110** with one finger (e.g., thumb) of the other hand. In still other embodiments, the user may touch the touch panel device **110** with more than one finger (e.g., four separate fingers) of one hand and simultaneously touch the touch panel device **110** with more than one finger (e.g., three separate fingers) of the other hand. In still other embodiments, the user may touch the touch panel device **110** with one or more fingers of one hand, and may simultaneously bring one or more fingers of the other hand close to the touch panel device **110** but not touch the touch panel device **110** using the one or more fingers of the other hand. In still other embodiments, the user may touch the touch panel device **110** with one or more other body parts (e.g., the user's elbow, toes, arms, etc.) of the user. In some embodiments, a touch panel device **110** interaction mode may need to be selected by the user in order to activate the touch panel function of the touch panel device **110.** In other embodiments, the touch panel device **110** interaction mode is the default mode for the touch panel device **110** such that the touch panel device **110** interaction mode is always on. When the touch panel device **110** interaction mode is activated, the touch panel device **110** may be able to detect the type of the user's interaction (e.g., touching the touch panel device **110** display, grabbing the touch panel device frame **210,** bringing a finger within close proximity of the touch panel device **110,** etc.) with the touch panel device **110.** Alternatively, the touch panel device **110** may be able to identify the user's body part (e.g., the user's thumb on the user's left hand) that caused the interaction of that body part with the touch panel device **110.** In the embodiment presented in Figure 1, the user's index finger **141** on the user's left hand is touching the touch panel display **220,** while the thumb **142** and middle finger **143** on the user's left hand are located in close proximity to the touch panel display **220.** Additionally, the user's thumb **151** on the right hand together with the other fingers on the user's right hand are grabbing a corner edge of the touch panel frame **210** and the touch panel display **220** and the reverse surface of the touch panel device **110.**

When the user is interacting with the touch panel device **110,** an image **121** (e.g., a shadow image) of the user's interaction is presented on the separate display device **120** (e.g., a television, a display monitor, etc.). Therefore, the system allows the user to interact with the display device **120** or the touch panel device **110** without looking at the touch panel device **110** in the user's hands. The user may interact with the display device **120** or the touch panel device **110** by looking directly at the display device **120.** The user experience provided by this invention would be similar to the user experience of directly touching the display device **120** and not the touch panel device **110.** By using and interacting with the touch panel device **110,** the user perceives that the user is interacting directly with the display device **120** even though the user is not interacting directly with the display device **120.** Therefore, the user can interact with the display device **120** without touching the display device **120** or being situated at a close distance to the display device **120.** In the embodiment presented in Figure 1, an image of the user's index finger **141** (along with the user's thumb **142** and the user's middle finger **143)** on the user's left hand is presented on the display device **120** as overlapping the visual information presented on the display device **120.** Additionally, an image of the user's thumb **151** on the user's right hand is presented on the display device **120** as overlapping the visual information presented on the display device **120.** As indicated in Figure 1, the user's hand and/or finger interactions may be used to interact with the visual information presented on the display device **120** and/or the touch panel device **110.** For example, an image of the user's index finger is being used to play a game on the display device **120** and/or the touch panel device **110.**

In some embodiments, the user can choose one or more options on the touch panel device **110** or on the display device **120** to change the characteristics of the image that appears on the display device **120.** For instance, the user may select an option to make the image visible or invisible, make the image transparent, translucent, or opaque, etc. Additionally, the user may select an option to change the color of the image. Additionally, the user may select an option to change the size of the image. Additionally, the user may select an option to change the image such that the image captures only parts of the hand that are touching the touch panel device **110,** e.g., the user chooses an option that captures an image of the user's fingers (or only the index finger or thumb) and does not capture an image of the rest of the user's hand such as the user's fist, palm, etc. In the embodiment presented in Figure 1, the user may have selected an option such that the image captures parts of the user's hand that are touching the touch panel device **110** and parts of the user's hand that are in close proximity to the touch panel device **110.** In some embodiments, the user may select an option to input the user's definition of 'close proximity.' For example, the user may choose one inch as the definition of 'close proximity.' In some embodiments, the image of the user's hands and/or fingers is also presented on the display of the touch panel device **110,** and in such embodiments, the user chooses one or more options (similar to the options provided with respect to the image displayed on the display device **120)** to change the characteristics of the image that appears on the touch panel device **110** display.

In some embodiments, the image of the user's hands or fingers is created by the touch panel device **110.** This may be accomplished by a sensory mechanism (e.g., electronic sensory mechanism such as a capacitive sensing mechanism) that senses the touch of the user's hands or fingers and creates a sensory map that includes the position of the user's hands or fingers along the x-axis, y-axis, and z-axis with respect to the surface of the touch panel device **110** display. The types of sensory mechanisms that may be used at the touch panel device **110** are not limited to the sensory mechanisms described herein. In some embodiments, the sensory map is created using sensory data regarding only parts of the user's hands that touch the touch panel device's **110** surface. In other embodiments, the sensory map is created using sensory data regarding both parts of the user's hands that touch the touch panel device **110** surface and parts of the user's hands that are in close proximity to the touch panel device **110** surface. In still other embodiments, the sensory map is created using sensory data regarding only parts of the user's hands that are in close proximity to the touch panel device **110** surface, but that do not actually touch the touch panel's device's surface. In still other embodiments, the touch panel device **110** may be configured to create the sensory map using sensory data associated with only one of the hands even when both hands are touching or are in close proximity to the touch panel device **110.** In still other embodiments, the touch panel device **110** may be configured to create the sensory map using sensory data associated with only particular fingers (e.g., the index finger and the thumb of the left hand) associated with a particular hand, even when other fingers of either hand are touching or are in close proximity to the touch panel device **110.** In still other embodiments, the touch panel device **110** may be configured to create the sensory map using sensory data associated with particular parts of particular fingers associated with a particular hand (e.g., the tip of the index finger of the left hand), even when other parts of the index finger of the left hand are touching or are in close proximity to the touch panel device **110** and even when other fingers of either hand are touching or are in close proximity to the touch panel device **110.**

In some embodiments, image-generating code (e.g., software code) may be executed on the touch panel device **110** that creates an image (e.g., an image of the user's hands or an image of just the fingers of the user's hands) based on the sensory data (or sensory map). Code may also be provided to modify the image according to the user's preferences based on options selected by the user to configure the image. As explained earlier, these options may relate to the color of the image, the transparency of the image, the size of the image, etc. Using a communication mechanism (see communication mechanisms described earlier) provided at the touch panel device **110,** the image may be transmitted to the display device **120.** The display device **120** receives the image and displays the image. In some embodiments, the display device **120** receives the image and may modify the image further prior to displaying the image. For example, the display device **120** may scale the image so that the ratio of the image size to the dimensions of the display device **120** is substantially similar to the ratio of the image size to the dimensions of the touch panel device **110.** In embodiments where the display device **120** presents, in real-time, the user's interactions with the touch panel device **110,** images are continuously transmitted from the touch panel device **110** to the display device **120** in real-time so that when the user's hands or fingers interact with the touch panel device **110,** the image presented on the display device **120** mirrors, or substantially mirrors, these interactions. In other embodiments, the touch panel device **110** does not create the image; instead, the touch panel device **110** transmits sensory data (or the sensory map) captured or collected at the touch panel device **110** to the display device **120.** The display device **120** may be provided with image-generating code, which when executed creates an image based on the sensor data. Code may also be provided at the display device **120** to modify the image according to the user's preferences based on the previously-described options selected by the user to configure the image. These options may be communicated by the touch panel device **110** to the display device **120** at the time when (or before or after) the touch panel device **110** transmits sensory data to the display device **120.** In embodiments where the display device **120** presents, in real-time, the user's interactions with the touch panel device **110,** sensory data is continuously transmitted from the touch panel device **110** to the display device **120** in real-time so that when the user's hands or fingers interact with the touch panel device **110,** images are created by the display device **120** and presented on the display device **120.** The result is that the stream of images presented on the display device **120** mirrors, or substantially mirrors, these interactions. In some embodiments, the display device **120** does not have to be specially configured to receive the image of the user's hands or fingers and present the image of the user's hands or fingers as overlapping (or in front of or on top of) the visual information presented on the display device **120;** therefore any existing display devices may be used.

In further embodiments, positional data associated with the hands or fingers that are interacting with the touch panel device **110** is not generated using sensors. Instead, one or more cameras may be provided on the touch panel device **110.** The one or more cameras may capture an image of the user's interactions with the touch panel device **110.** A real-time stream of these images is communicated to the display device **120** using or more communication mechanisms described above. The display device **120** then presents this real-time stream of images to the user.

Display device **120** may include one or more components capable of providing visual information. In some embodiments, the display device **120** may be a television. In other embodiments, the display device **120** may be a liquid crystal display (LCD). In still other embodiments, the display device **120** may be any one of other display technologies, such as a plasma display panel (PDP), a field emission display (FED), a thin film transistor (TFT) display, etc. The display device **120** may be utilized to display, for example, text, image, and/or video information.

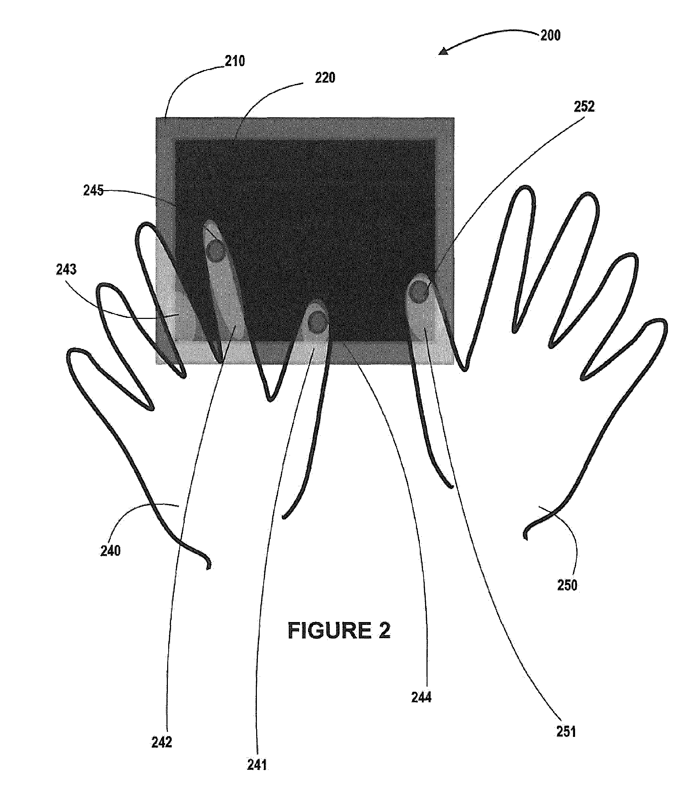

Referring now to Figure 2, Figure 2 presents an embodiment **200** of a touch panel device **110.** As indicated in Figure 2, the touch panel device **110** may include a touch panel frame **210** and a touch panel device **110** display (may also be simply referred to as the touch panel display **220).** In some embodiments, as explained above, a touch pad may replace the touch panel display **220.** In some embodiments, the touch panel frame **210** surrounds the touch panel device **110** around one or more of the edges or sides of the touch panel display **220.** In some embodiments, the touch panel frame **210** may also cover the reverse side or back side of the touch panel display **220.** In the embodiment presented in Figure 2, the tip **245** of the index finger of the left hand **240,** the tip **244** of the thumb of the left hand **240,** and the tip **252** of the thumb of the right hand **250** are touching the touch panel display **220.** An interior part of a finger may be divided into three portions: a top portion (which includes the tip), a middle portion, and a bottom portion. Each portion of a finger may also be referred to as a phalange. As presented in Figure 2, the bottom portion **243** of the middle finger of the left hand **240,** the top (excluding the tip), middle, and bottom portions **242** of the index finger of the left hand **240,** the top **241** (excluding the tip) portion of the thumb of the left hand **240,** and the top **251** (excluding the tip) portion of the thumb of the right hand **250** are located in close proximity to the touch panel display **220,** but are not actually touching the touch panel display **220.**

As explained previously, the touch panel device **110** may be configured to detect and identify which portions of which fingers on which hand are touching the touch panel device **110** (e.g., the touch panel device **110** display and/or the touch panel device frame **210).** Additionally or alternatively, the touch panel may be configured to detect and identify which portions of which fingers on which hand are in close proximity to the touch panel device **110** (e.g., the touch panel device **110** display and/or the touch panel device frame **210).** In some embodiments, the touch panel device **110** may allow a user to select an option to switch between various detection and identification modes (e.g., touch-only identification mode, proximity-only identification mode, combined touch and proximity identification mode, etc.). In embodiments where a capacitive sensing technology is used in the touch panel device **110,** the touch panel device **110** can normally detect a finger's touch on the touch panel display **220.** When the gain factor associated with one or more capacitive sensors is increased, the touch panel device **110** with the capacitive sensors can detect portions of a finger or hand that are in close proximity to, but not touching, the touch panel display **220.** However, when the gain of the one or more capacitive sensors is increased, power consumption of the touch panel device **110** also increases.

In other embodiments, an in-cell touch panel may be used. The in-cell touch panel may have the capability to sense parts of fingers that touch the touch panel display **220** and parts of fingers that are in close proximity to the touch panel display **220.** In some embodiments, the in-cell touch panel may be able to sense parts of one or more fingers that are situated at a similar distance away from the touch panel display **220.** A touch panel device **110** based on in-cell technology may require more processing and more data transfer to and from a data processor when compared to a touch panel device **110** based on capacitive technology. In some embodiments, in-cell touch panels refer to touch panel devices **110** where the production of capacitive sensor arrays is integrated in the AMOLED (active-matrix organic light-emitting diode) module fabrication process.

Since the power consumption associated with proximity sensing is high regardless of the sensing technology (e.g., capacitive technology, in-cell technology, etc.) used in the touch panel device **110,** the touch panel device **110** may be configured to disable proximity sensing when the touch panel device **110** gathers enough information to create a meaningful image of the user's hands or fingers (e.g., when the touch panel device **110** determines that it has determined or collected more than a threshold amount of positional data required to create an image). In some embodiments, a user of the device may modify the amount of information (e.g., the duration of sensing, the size of a sensory data file, etc.) that the touch panel device **110** needs to gather before the touch panel device **110** disables the proximity sensing at the touch panel device **110.** In some embodiments, the touch panel device **110** may automatically determine when to disable proximity sensing based on the amount of energy remaining in the power source connected to the touch panel device **110.** For example, if the touch panel device **110** determines that the amount of energy remaining in the power source connected to the touch panel device **110** is below a certain threshold, the touch panel device **110** may lower the amount of proximity sensing information obtained. When less proximity sensing information is obtained, the image of the hands or fingers that appears on the display unit may be of lower equality (e.g., the image may appear grainy, less sharp, lighter in color, etc.). On the other hand, if the touch panel device **110** determines that the touch panel device **110** is connected to an electrical outlet, the touch panel device **110** may raise the amount of proximity sensing information obtained. When more proximity sensing information is obtained, the image of the hands or fingers that appears on the display unit may be of higher quality (e.g., the image appears darker, sharper, etc.)

In some embodiments, one or more triggers may be established or modified by the user to enable proximity sensing at the touch panel device **110.** For example, proximity sensing may be enabled when a user's hands or fingers approach the touch panel device **110** surface (e.g., the touch panel device **110** display). In some embodiments, proximity sensing may be enabled when a user's hands or fingers approach other parts of the touch panel device **110** (e.g., the touch panel device frame **210,** the reverse surface of the touch panel device **110,** etc.). As a further example, proximity sensing may be enabled when the user grabs or releases, with the user's hands or fingers, the touch panel device **110** or changes the grabbing position of the touch panel device **110** in the user's hands. In some embodiments, proximity sensing may be enabled when the user grabs or releases, with the user's hands or fingers, certain portions of the touch panel device **110** (e.g., the touch panel device frame **210,** the touch panel device **110** display, etc.). In some embodiments, grabbing may refer to an action where at least one part of a user's hand (e.g., the user's finger) is touching a part of the touch panel device **110** other than the touch panel device **110** display such as the touch panel device frame **210.** In other embodiments, grabbing may refer to an action where at least one part of a user's hand (e.g., one of the user's fingers) is touching the touch panel device frame **210** along the edge or front surface of the touch panel device **110** and/or at least one part of the user's same hand (e.g., another one of the user's fingers) is touching the touch panel device **110** on the reverse surface of the touch panel device **110.** In still other embodiments, grabbing may refer to an action where the user's hand is wrapped around at least some part of an edge of the touch panel device **110** (e.g., the touch panel device frame **210).** In some embodiments as described herein, the action of grabbing the touch panel device **110** includes the action of touching the touch panel device **110** at one or more distinct points of the touch panel device **110** using one or both hands.

In some embodiments, proximity sensing may be enabled when a user's finger touches or leaves the touch panel display **220** surface. As a further example, proximity sensing may be enabled when the touch panel device **110** needs more information to speculate the positions of the user's fingers and/or create the sensory map. As a further example, proximity sensing may be enabled when a timer associated with the proximity sensing function reaches an expiration time. In some embodiments, the proximity sensing function may be periodically (regular or irregular periods) turned on and turned off. Therefore, when the off period expires, the proximity sensing function automatically turns on.

The proximity function described herein may be referred to as an adaptive proximity function because the proximity function adapts to sensing proximity based on the one or more triggers that have been selected either automatically by the touch panel device **110** or by the user. In some embodiments, triggers may be necessary so that the proximity sensing function is not always on; this is important because proximity sensing requires consumption of energy from a power source associated with the touch panel device **110** that may have a limited amount of energy. In embodiments where the proximity sensing function is separate from a touch sensing function associated with the touch panel device **110,** the proximity sensing function may require consumption of a greater amount of energy than the touch sensing function. In some embodiments where the proximity sensing function is separate from a touch sensing function, the touch sensing function may be always on; however, in other embodiments, the above-described triggers may be used to trigger the switching `on' of the touch sensing mode of the touch panel device **110.** In some embodiments, the touch sensing function may part of the proximity sensing function.

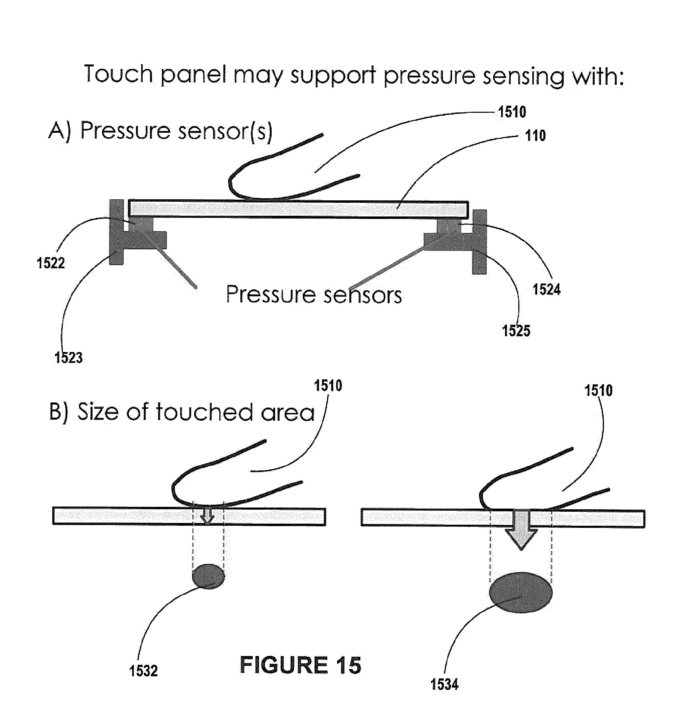

Referring now to Figure 15, Figure 15 presents an embodiment of a touch panel device **110** where the touch panel device **110** includes one or more pressure sensors **1522, 1524** or pressure sensing devices. These pressure sensors **1522, 1524** may be situated under the touch panel device **110** display surface and/or under the touch panel frame surface. These pressure sensors **1522, 1524** may be supported by one or more supporting devices **1523, 1525.** The one or more pressure sensors **1522, 1524,** either individually or working in combination, may be used to detect a location (along the x-axis and y-axis) of touch on the touch panel device **110.** As used herein, the touch may be associated with a human finger **1510** or any other deformable or non-deformable object such as a stylus, a pen, etc. In some embodiments, a processor in communication with the pressure sensors **1522, 1524** may not only be able to detect a location of the touch, but also be able to determine the pressure associated with the touch, the size of the touched area, the shape of the touch area, etc. A processor associated with one or more pressure sensors **1522, 1524** may register a touch event (that causes selection of a menu, icon, a digital option, etc.) in response to detecting a touch on the touch panel device **110,** where the touch is associated with a pressure greater than one or more threshold levels of pressure.

As a further example, as indicated in Figure 15B, when the pressure exerted by the finger **1510** is small (e.g., below one or more threshold levels of pressure), the one or more pressure sensors **1522, 1524** (or a processor in communication with the one or more pressure sensors **1522, 1524)** may determine that the size of the touched area **1532** is smaller than a threshold area. Additionally, the one or more pressure sensors **1522, 1524** (or a processor in communication with the one or more pressure sensors **1522, 1524)** may determine that the shape of the touched area **1532** is of a particular shape (e.g., circular). In some embodiments, a processor associated with one or more pressure sensors **1522, 1524** may not register a touch event in response to detecting a touch on the touch panel that is associated with a pressure smaller than one or more threshold levels of pressure, and/or determining the size of the touched area **1532** is smaller than a threshold area, and/or determining that the touched area **1532** is not associated with a particular shape (e.g., elliptical, etc.) that triggers a touch event, etc.

When the pressure exerted by the finger **1510** is large (e.g., greater than one or more threshold levels of pressure), the one or more pressure sensors **1522, 1524** (or a processor in communication with the one or more pressure sensors **1522, 1524)** determines that the size of the touched area **1534** is larger than a threshold area. In some embodiments, a processor associated with one or more pressure sensors **1522, 1524** may register a touch event in response to detecting a touch on the touch panel that is associated with a pressure greater than one or more threshold levels of pressure, and/or determining the size of the touched area **1534** is greater than a threshold area, and/or determining that the touched area **1534** is associated with a particular shape (e.g., elliptical, etc.) that triggers a touch event, etc. By determining the size (and/or shape of the touched area **1534),** a processor in communication with the one or more pressure sensors **1522, 1524** may be able to more accurately determine positional data associated with a finger's **1510** touching of the touch panel device **110,** and may be able to more accurately determine a touch event (e.g., selecting a particular menu, option, icon, etc.) intended by the finger **1510.**

By determining positional data associated with a finger's touching of the touch panel device **110** using a pressure sensing mechanism, a processor associated with the touch panel device **110** may be able to create images of the user's hand and/or fingers with a higher degree of accuracy. Additionally, the pressure sensing mechanism described herein may be used in combination with one or more other sensing mechanisms described herein in order to create images of the user's hand and/or fingers with a higher degree of accuracy.

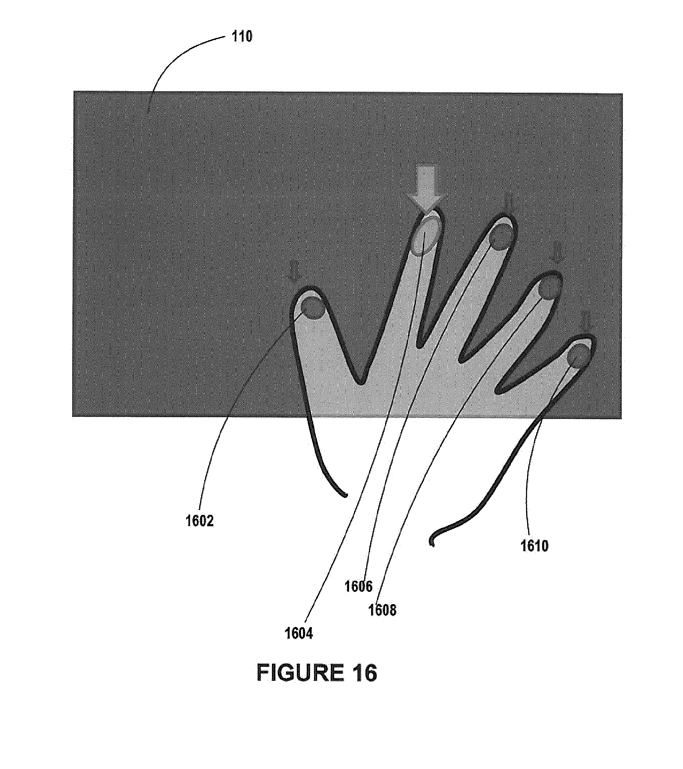

Referring now to Figure 16, Figure 16 presents an embodiment of a touch panel device **110** with a pressure sensing mechanism as presented in Figure 15. In the embodiment presented in Figure 16, a processor associated with the one or more pressure sensors determines that the pressure associated with the touch of the tip of the index finger **1604** is greater than a threshold pressure. In some embodiments, this threshold pressure may be set by a user of the touch panel device **110,** while in other embodiments, this threshold pressure may be dynamically determined by the touch panel device **110** itself. Since the touch of the tip of the index finger **1604** is greater than a threshold pressure, this touch is registered as a touch event, and a processor associated with the touch panel device **110** executes one or more commands in response to the occurrence of the touch event. Additionally, a processor associated with the one or more pressure sensors determines that the pressures associated with the touches of the other fingers **1602, 1606, 1608, 1610** are smaller than a threshold pressure. Since the touches of the tips of the other fingers **1602, 1606, 1608, 1610** are smaller than a threshold pressure, these touches are not registered as touch events. By determining that only the touch associated with the tip of the index finger **1604** triggers a touch event, a processor associated with the touch panel device **110** can create an image of the hand and/or fingers with a higher degree of accuracy.

Additionally, as indicated in Figure 16, a processor in communication with one or more pressure sensors determines that the touch area associated with the touch of the tip of the index finger **1604** is larger than the touch areas associated with the touches of the tips of the other fingers **1602, 1606, 1608, 1610.** This additional information may be used by the processor associated with the touch panel device **110** to create an image of the hand and/or fingers with a higher degree of accuracy. Additionally, as explained previously with respect to Figure 15, the larger touch area (and/or the particular shape of the touch area (e.g., elliptical)) associated with the touch of the tip of the index finger **1604** may be used by the processor in communication with the one or more touch sensors to determine or register a touch event in response to the touch of the tip of the index finger **1604.** Still additionally, as explained previously with respect to Figure 15, the smaller touch areas (and/or the particular shapes of the touch areas (e.g., circular)) associated with the touches of the tips of the other fingers **1602, 1606, 1608, 1610** may be used by the processor in communication with the one or more touch sensors to determine that even though the other fingers **1602, 1606, 1608, 1610** are touching the touch panel device **110** surface, these touches do not trigger any touch events. Therefore, in some embodiments, the size and shape of the touch areas may be alternatively or additionally used by the processor associated with the touch panel device **110** to create an image of the hand and/or fingers with a higher degree of accuracy.

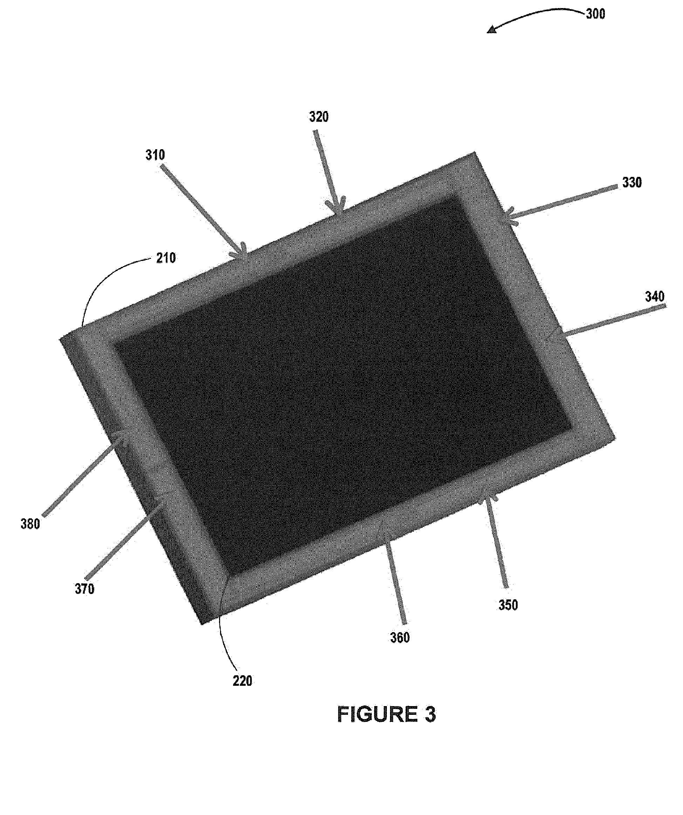

Referring now to Figure 3, Figure 3 presents an embodiment **300** of a touch panel device **110.** As described previously, the touch panel frame **210** surrounds the touch panel device **110** around one or more of the edges or sides of the touch panel device **110** display. In some embodiments, the touch panel frame **210** may also cover the reverse side or back side of the touch panel display **220.** The touch panel frame **210** may be equipped with a sensing function. The touch panel frame **210** (e.g., one or more sensors associated with the touch panel frame **210)** may be able to detect touch on the touch panel frame **210.** The touch panel frame **210** can communicate this sensory data to a processor that can determine or identify which hand (or which finger of which hand) is grabbing or touching (or is in close proximity to) which part of the touch panel frame **210.** For example, in the embodiment presented in Figure 3, the touch panel frame **210** is divided into eight distinct sensing sections **310, 320, 330, 340, 350, 360, 370,** and **380** along the edges or sides of the touch panel frame **210.** A processor in communication with the touch panel frame **210** can determine the location of the touch based on which sensing section is touched by the user. In some embodiments, one or more position sensors (e.g., accelerometers) may be provided in the touch panel device **110** to detect the orientation (e.g., landscape orientation, portrait orientation, etc.) or status of the touch panel device **110.** A processor in communication with the one or more position sensors may use information provided by the sensors to identify the orientation or status of the touch panel device **110.** As used herein, a processor may be located inside or outside the touch panel device **110.** In other embodiments not shown in the Figures, the touch panel frame **210** may cover only the reverse surface and the edges of the touch panel device **110,** while the touch panel display **220** covers the entire front surface of the touch panel device **110.**

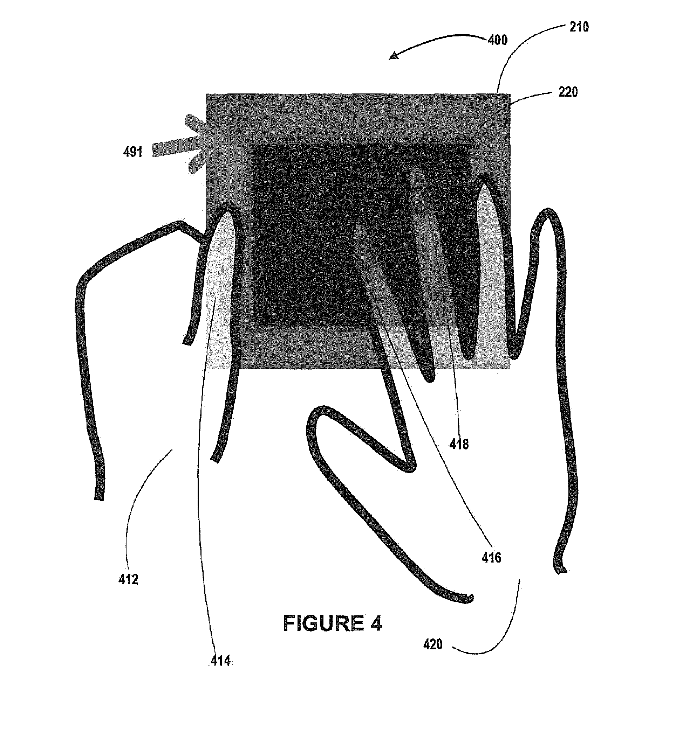

Referring now to Figure 4, Figure 4 presents an embodiment **400** of a touch panel device **110.** In the embodiment presented in Figure 4, the sensor associated with a sensing section on the left hand side or left edge of the touch panel frame **210** detects that the user's hand **412** is grabbing the touch panel device **110** on that sensing section (the sensing section is indicated by the arrow **491).** This sensory data is communicated to a processor. The processor in communication with the touch panel device **110** may use the sensory data to determine that the user's left hand **412** is grabbing the sensing section on the left hand side or left edge of the touch panel frame **210.** In some embodiments, the processor in communication with the touch panel device **110** may use the sensory data to determine the left thumb **414** of the user's left hand **412** is touching the sensing section on the left hand side of the touch panel, and that one or more other fingers (e.g., the index finger and the middle finger of the user's left hand) are touching the reverse surface of the touch panel device frame **210.** Using a deductive process, a processor in communication with the touch panel device **110** display may determine that the fingers **416, 418** touching the touch panel display **220** (or in close proximity to the touch panel display **220)** belong to the right hand **420** of the user. As explained previously, additionally, a processor in communication with the touch panel device **110** display may determine which parts (e.g., tips of user's finger's **416, 418)** of which fingers of the user's right hand **420** are touching the touch panel display **220,** and which parts of which fingers of the user's right hand are in close proximity to the touch panel display **220.** Still additionally, in some embodiments described herein, the processor in communication with the touch panel device **110** display may determine the position (along the x-axis, y-axis, and z-axis with respect to the touch panel device **110** surface) of each part of the user's hands (either right hand or left hand) with respect to each part of the touch panel device **110.**

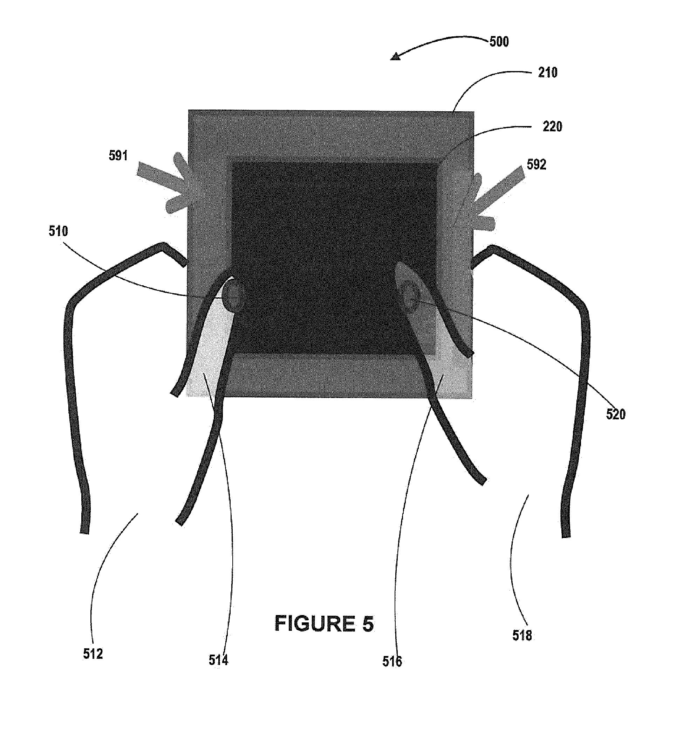

Referring now to Figure 5, Figure 5 presents an embodiment **500** of a touch panel device **110.** In the embodiment presented in Figure 5, the sensor associated with a sensing section on the left hand side or edge of the touch panel frame **210** detects that the user's hand **512** is grabbing the touch panel device **110** on that sensing section (the sensing section is indicated by the arrow **591).** This sensory data is communicated to a processor. The processor in communication with the touch panel device **110** may use the sensory data to determine that the user's left hand **512** is grabbing the sensing section on the left hand side or edge of the touch panel frame **210.** In some embodiments, the processor in communication with the touch panel device **110** may use the sensory data to determine the thumb **514** of the user's left hand **512** is touching the sensing section on the left hand side or edge of the touch panel, and that one or more other fingers (e.g., the index finger and the middle finger of the user's left hand) are touching the reverse surface of the touch panel device frame **210.** Additionally, the sensor associated with a sensing section on the right hand side or edge of the touch panel frame **210** detects that the user's hand **518** is grabbing the touch panel device **110** on that sensing section (the sensing section is indicated by the arrow **592).** This sensory data is communicated to a processor. The processor in communication with the touch panel device **110** may use the sensory data to determine that the thumb **516** of the user's right hand **518** is grabbing the sensing section on the right hand side or edge of the touch panel device frame **210.** In some embodiments, the processor connected to the touch panel device **110** may use the sensory data to determine the thumb **516** of the user's right hand **518** is touching the sensing section on the right hand side or edge of the touch panel, and that one or more other fingers (e.g., the index finger and the middle finger of the user's right hand) are touching the reverse surface of the touch panel device frame **210.** Using a deductive process, the one or more processors that receive information from the sensors associated with both sensing sections (associated with the left and right edges of the touch panel frame **210)** may determine that since the user is grabbing the device on two opposite edges or sides of the touch panel device frame **210,** the two body parts (or fingers) that are touching the touch panel device **110** display are the tips **510, 520** of the thumbs **514, 516** of the user's hands.

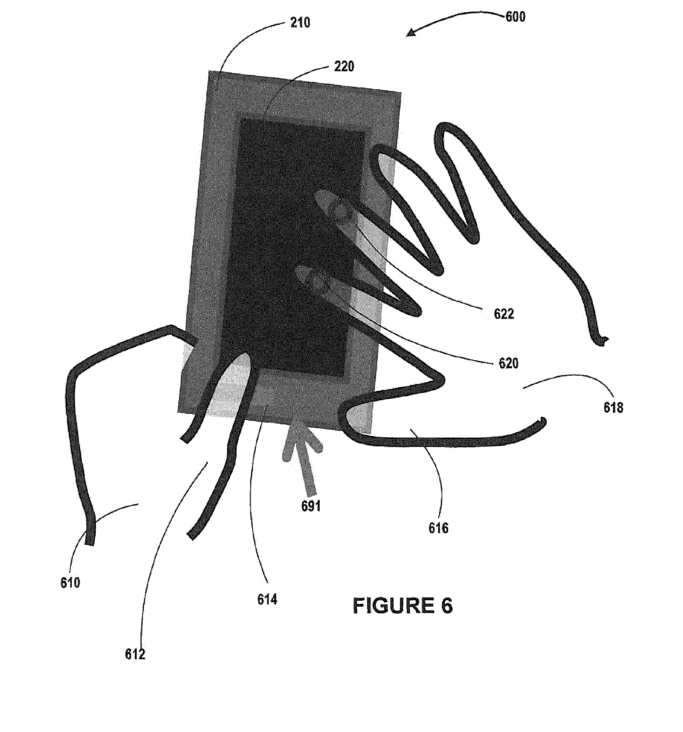

Referring now to Figure 6, Figure 6 presents an embodiment **600** of a touch panel device **110.** In the embodiment presented in Figure 6, the sensor associated with a sensing section on the bottom-left corner or edge **614** of the touch panel frame **210** detects that the user's hand **610** is grabbing the touch panel device **110** on that sensing section. The bottom edge or side of the touch panel frame **210** is indicated by the arrow **691.** This sensory data is communicated to a processor. The processor in communication with the touch panel device **110** may use the sensory data to determine that the user's hand is grabbing the sensing section on the bottom-left corner **614** or edge of the touch panel frame **210.** In some embodiments, the processor in communication with the touch panel device **110** may use the sensory data to determine the left thumb **612** of the user's left hand **610** is touching the sensing section on the bottom-left corner or edge of the touch panel frame **210,** and that one or more other fingers (e.g., the index finger and the middle finger of the user's left hand) of the user's left hand **610** are touching the reverse surface of the touch panel device frame **210.** Using a deductive process, the processor in communication with the touch panel device **110** display may determine that since the user's hand **610** is grabbing the touch panel device **110** at a corner of the touch panel device **110,** the user is touching the touch panel display **220** with the user's dominant hand **618** (e.g., the user's right hand) or that the user brings the user's dominant hand **618** into close proximity of the touch panel display **220.** As explained previously, additionally, the processor in communication with the touch panel device **110** display may determine which parts of which fingers (tips **620** and **622** of the index finger and middle finger of the user's dominant hand **618)** of the user's dominant hand **618** are touching the touch panel display **220,** and which parts of which fingers (tip of the user's thumb **616)** of the user's dominant hand are in close proximity to the touch panel display **220** or are touching the touch panel device frame **210.**

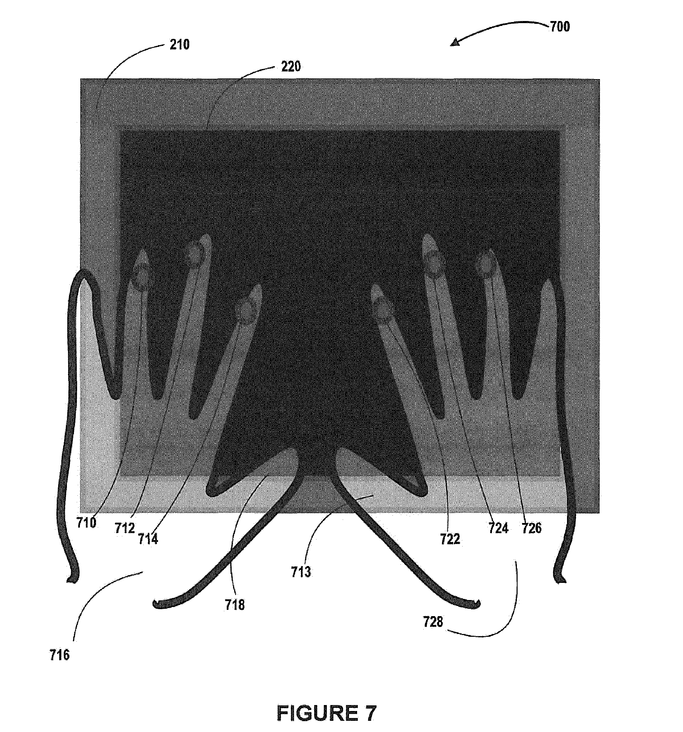

Referring now to Figure 7, Figure 7 presents an embodiment **700** of a touch panel device **110.** In the embodiment presented in Figure 7, none of the sensing sections along the edges of the touch panel frame **210** or the one or more sensing sections on the reverse surface of the touch panel frame **210** detect that the user is grabbing the touch panel frame **210.** This sensory data is communicated to a processor. The processor connected to the touch panel device **110** may use the sensory data to determine or deduce that the user is touching the touch panel device **110** display with the fingers **710, 712, 714, 718, 722, 723, 724, 726** (or tips of fingers) from both hands **716, 728.** Using the sensory data, the processor may also determine that the touch panel device **110** is resting on and being supported by an external flat surface. Additionally or alternatively, the touch panel device **110** may be configured to determine that the user is touching the touch panel device **110** display with fingers from both hands if the number of touching points on the touch panel display **220** is greater than a predetermined threshold number of touching points. In some embodiments, as the number of touching points detected on the touch panel display **220** increases, the touch panel device **110** can determine with greater probability (or statistical confidence) that the user is touching the device display **220** with fingers from both hands. In some embodiments, if the touch panel device **110** display detects that the touching points occur nearly simultaneously on both the left hand side and the right hand side of the touch panel display **220,** the touch panel device **110** may determine that the user is touching the touch panel device **110** display with fingers from both hands.

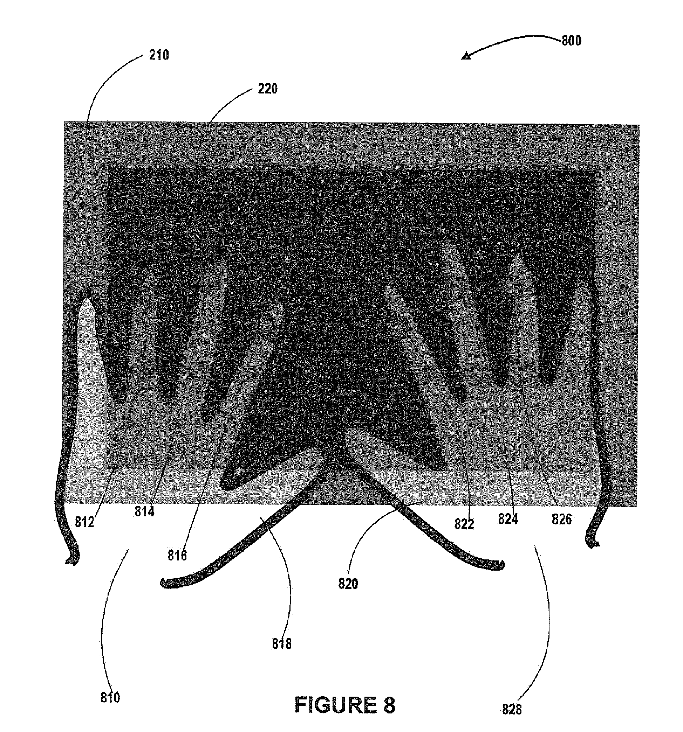

Referring now to Figure 8, Figure 8 presents an embodiment **800** of a touch panel device **110.** In the embodiment presented in Figure 8, the sensor associated with a sensing section on the bottom-left side or edge of the touch panel frame **210** detects that the user's hand **810** is touching (and not grabbing) the touch panel device **110** on that sensing section. This sensory data is communicated to a processor. The processor in communication with the touch panel device **110** may use the sensory data to determine that the user's hand **810** is touching the sensing section on the bottom-left side or edge of the touch panel frame **210.** Additionally, the sensor associated with a sensing section on the bottom-right side or edge of the touch panel frame **210** detects that the user's hand **828** is touching the touch panel device **110** on that sensing section. This sensory data is communicated to a processor. The processor in communication with the touch panel device **110** may use the sensory data to determine that the user's hand **828** is touching (and not grabbing) the sensing section on the bottom-right side or edge of the touch panel frame **210.** This sensory data is communicated to a processor. Using the sensory data from the bottom-left edge and the bottom-right edge of the touch panel frame **210,** the processor connected to the touch panel device **110** may determine that the user is touching the touch panel device **110** display with fingers **812, 814, 816, 818, 820, 822, 824, 826** (or tips of fingers) from both hands. Using the sensory data, the processor may also determine that the touch panel device **110** is resting on and being supported by an external flat surface. Additionally or alternatively, the touch panel device **110** may be configured to determine that the user is touching the touch panel device **110** display with fingers from both hands if the number of touching points on the touch panel display **220** is greater than a predetermined threshold number of touching points. In some embodiments, as the number of touching points detected on the touch panel display **220** increases, the touch panel device **110** can determine with greater probability (or statistical confidence) that the user is touching the device display **220** with fingers from both hands. In some embodiments, if the touch panel device **110** display detects that the touching points occur nearly simultaneously on both the left hand side and the right hand side of the touch panel display **220,** the touch panel device **110** may determine that the user is touching the touch panel device **110** display with fingers from both hands.

The methods of determining (or speculating, predicting, etc.) which fingers of which hands are interacting with the touch panel device **110** may be combined with information regarding one or more software applications that are being executed on the touch panel device **110** while the user's fingers or hands are interacting with the touch panel device **110.** For example, when a software keyboard appears on the touch screen display or has been present on the display for a predetermine period, the touch panel device **110** can determine with a greater degree of probability (or statistical confidence) that the user is touching the touch panel device **110** with fingers from both hands.

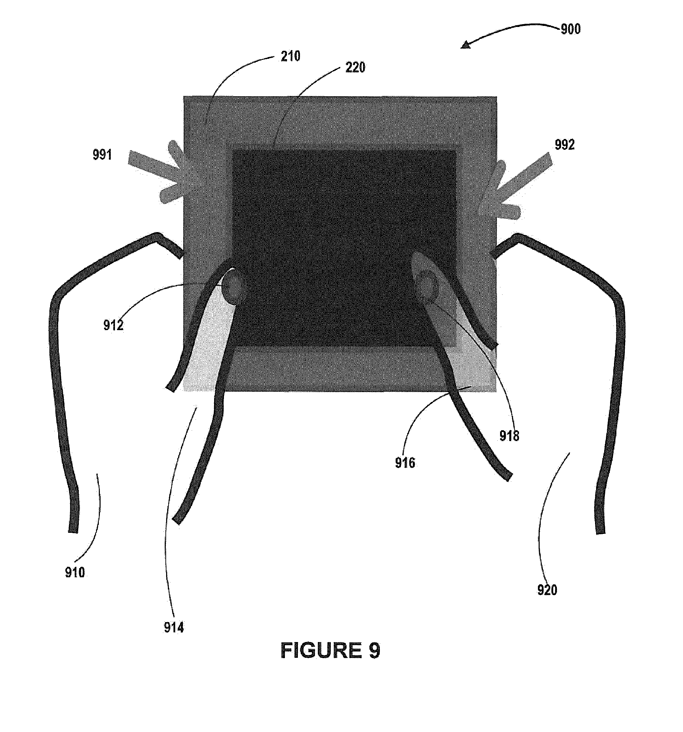

Referring now to Figure 9, Figure 9 presents an embodiment **900** of a touch panel device **110.** In some embodiments, kinematic information, information regarding orientation of the touch panel device **110,** and information regarding the dimensions of the touch panel device **110** can be used for the purpose of speculating/predicting/determining the positions of a user's hands or fingers. For example, for the touch panel device **110** presented in Figure 9, the touch panel device **110** may have access to information that the dimensions of the touch panel device **110** are small. Additionally, the touch panel device **110** may recognize that the touch panel device **110** is presenting information to the user in landscape mode. Using these pieces of information, the touch panel device **110** (e.g., a processor associated with the touch panel device **110)** may determine that the user is touching the touch panel device **110** display with both thumbs **914, 916** (or with the tips **912, 918** of both thumbs) on both hands **910, 920.** Additionally, in some embodiments, the sensing sections **991** and **992** may be activated; and the sensory data is passed on to a processor that determines that the user is grabbing the touch panel device **110** using both the user's right **920** and left **910** hands. This information may be additionally or alternatively be used to determine that the user is touching the touch panel device **110** display with both thumbs **914, 916** (or with the tips **912, 918** of both thumbs) on both hands **910, 920.**

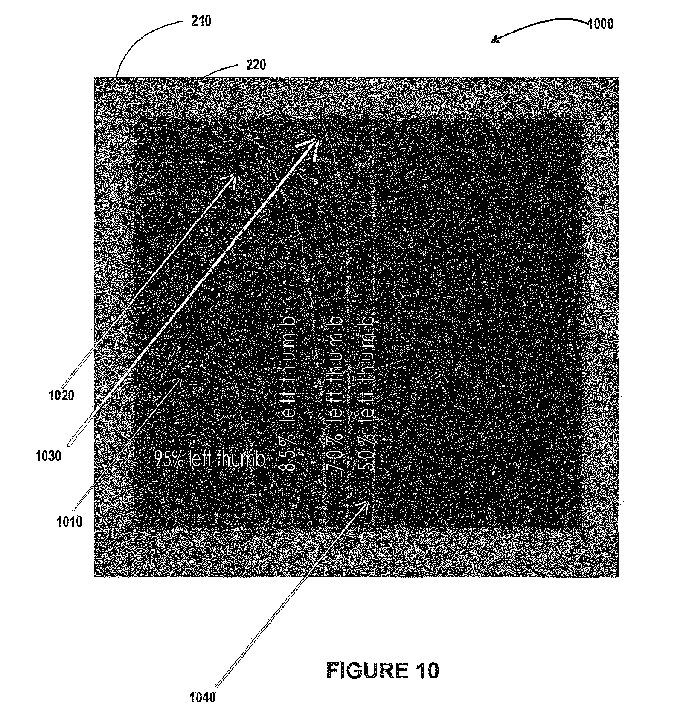

Referring now to Figure 10, Figure 10 presents a probability map **1000** associated with the touch panel display **220** of the touch panel device **110** presented in Figure 9. When the user interacts with (e.g., touches) the touch panel display **220** of the touch panel device **110** presented in Figure 9 using the user's thumbs, it is likely that the user does not usually cross the user's left and right thumbs while interacting with (e.g., touching) the touch panel display **220.** Therefore, a probability map can be built into the touch panel device **110,** or the device may itself dynamically generate the probability map based on a user's previous interaction with the touch panel display **220.** The probability map displays that when the touch panel display **220** detects a touch in the first section **1010,** the touch panel display **220** attaches a 95% probability that the touch is associated with user's left thumb. Similarly, when the touch panel display **220** detects a touch in the second section **1020,** the touch panel display **220** attaches an 85% probability that the touch is associated with user's left thumb. Similarly, when the touch panel display **220** detects a touch in the third section **1030,** the touch panel display **220** attaches a 70% probability that the touch is user's left thumb. Similarly, when the touch panel display **220** detects a touch in the fourth section **1040,** the touch panel display **220** attaches a 50% probability that the touch is associated with the user's left thumb.

As indicated previously, the touch panel device **110** may use other kinematic information or other general information to speculate or predict which fingers of which hands are interacting with which parts of the touch panel device **110.** For example, the touch panel device **110** may use kinematic information associated with both the user's hands and the user's arms. As a further example, the touch panel device **110** may use information associated with the speed (or the rate of change of speed, i.e., the acceleration) with which a finger or a hand of the user is moving. The touch panel device **110** may use information that the finger or hand of the user is moving at a speed (or with an acceleration) greater than a predetermined threshold or smaller than a predetermined threshold. Additionally, the touch panel device **110** may use information that the user is avoiding crossing fingers from one hand with fingers from another hand, or is avoiding crossing of one hand with the other hand, or is avoiding crossing of one arm with another arm, or is avoiding crossing of the user's fingers with the user's arm, etc., in order to speculate/predict/determine which fingers of which hands are interacting with which parts of the touch panel device **110.** Additionally, the touch panel device **110** may use the predetermined fact that the number of fingers on a user's hand is usually five fingers. Additionally, the touch panel device **110** may use the fact that maximum distance between two fingers on one hand (or between two fingers, where each finger is on a different hand) is a predetermined value.

In further embodiments, the user may wear a ring on one of the user's fingers. In some embodiments, the ring may be a generic metallic ring, while in other embodiments, the ring may be made with special material such that the ring's location position (along the x-axis, y-axis, or z-axis with respect to the touch panel device **110** surface) can be detected by the touch panel device **110** (e.g., using a sensor that can sense metallic objects or sense objects made with special material). In embodiments where the user wears a ring on of the user's fingers, the touch panel device **110** may be able to determine which finger (and of which hand) is touching the touch panel display **220** or the location of the finger when the finger is not touching the touch panel display **220,** e.g., when the finger is in close proximity to the touch panel device **110.**

In some embodiments, the touch panel device **110** may allow the user to input user preference information or other calibration data. For example, the user may input which hand of the user is the user's dominant hand. As a further example, the user may input the user's hand sizes, finger sizes, arm lengths, etc. As a further example, the user may input the user's age and sex, and this information may be used by the touch panel device **110** to determine or guess kinematic information associated with the user's interactions. As a further example, the user may input the dimensions of the touch panel device **110,** though this information may be input by the manufacturer of the device. As a further example, the user may input the identification of the finger on which the user is wearing a ring. Each of these pieces of user preference information or calibration data may be used to speculate or predict which fingers of which hands are interacting with which parts of the touch panel device **110.**

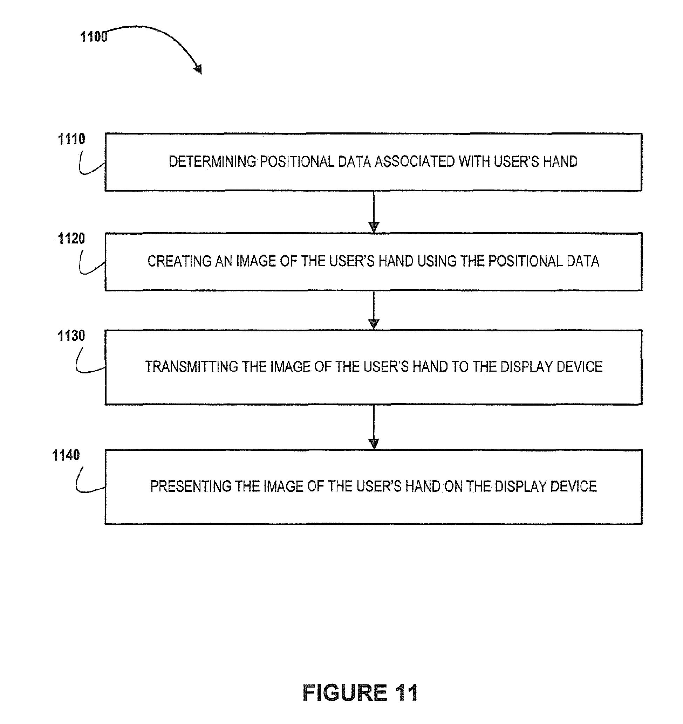

Referring now to Figure 11, Figure 11 is a flowchart illustrating a general process flow for determining a finger that interacts with a touch panel device, in accordance with embodiments of the present invention.

At block **1110,** the process flow includes determining, with respect to a touch panel device **110,** positional data associated with a user's first hand that interacts with the touch panel device **110.** In some embodiments, block **1110** additionally includes determining, with respect to the touch panel device **110,** positional data associated with the user's second hand that interacts with the touch panel device **110** either independently of or based at least partially on the determining, with respect to a touch panel device **110,** positional data associated with a user's first hand that interacts with the touch panel device **110.** Additionally, in some embodiments, the method additionally includes identifying a finger of the user's first hand or the user's second hand based at least partially on the determining, with respect to a touch panel device **110,** positional data associated with a user's first hand that interacts with the touch panel device **110** and the determining, with respect to the touch panel device **110,** positional data associated with the user's second hand that interacts with the touch panel device **110.** At block **1120,** the process flow includes creating an image of the user's first hand using the positional data. At block **1130,** the process flow includes transmitting the image of the user's first hand, via a transmission mechanism, to a display device **120.** At block **1140,** the process flow includes presenting the image of the user's hand on the display device **120.** In alternate embodiments, the positional data is transmitted from the touch panel device **110** to the display device **120,** and the display device **120** creates the image, rather than the touch panel device **110.** In some embodiments, both the touch panel device **110** and display device **120** create parts of the image that is displayed on the display device **120.** In some embodiments, each step presented in Figure 11 may serve as a triggering event for the next step. However, the steps of the method presented in Figure 11 may be performed in an order different from that presented in Figure 11.

Referring now to Figure 12, Figure 12 is a diagram illustrating a front view of exemplary external components of an exemplary touch panel device **110.** As illustrated, the touch panel device **110** may include a housing **1205** (the housing **1205** includes the touch panel device frame **210),** a microphone **1210,** a speaker **1220,** a display **220,** and a camera button **1260.** As indicated in Figure 12, a digital keypad **1230** and digital function keys **1240** may be presented on the display **220** when the user accesses a software application. In some embodiments, the touch panel device **110** may include a separate physical keypad that can be used to input information in addition to the digital keypad **1230** that can be accessed on the touch panel display **220.** The terms device and component, as used herein, is intended to be broadly interpreted to include hardware, software, and/or a combination of hardware and software.

Housing **1205** may include a structure configured to contain components of the touch panel device **110.** For example, housing **1205** may be formed from plastic and may be configured to support the touch panel device frame **210,** microphone **1210,** speaker **1220,** display **220,** camera button **1260,** and one or more sensors that can sense the position of a user's hands or fingers along the x-axis, y-axis, or z-axis with respect to the touch panel device **110** surface.

Microphone **1210** may include any component capable of transducing air pressure waves to a corresponding electrical signal. For example, a user may speak into microphone **1210** during a telephone call. Speaker **1220** may include any component capable of transducing an electrical signal to a corresponding sound wave. For example, a user may listen to music through speaker **1220.**

Digital keypad **1230** may be capable of providing input to device **110.** Keypad **1230** may include a standard digital telephone keypad. Keypad **1230** may also include one or more special purpose keys. In one implementation, each key of keypad **1230** may be, for example, a digital pushbutton. A user may utilize keypad **1230** for entering information, such as text or a phone number, or activating a special function. In some embodiments, the keypad **1230** includes a QWERTY keyboard or any other keyboard configured by the user or by the touch panel device **110.**

Digital function keys **1240** may be capable of providing input to touch panel device **110.** Digital function keys **1240** may include a key that permits a user to cause the touch panel device **110** to perform one or more operations. The functionality associated with a key of digital function keys **1240** may change depending on the mode of the touch panel device **110.** For example, digital function keys **1240** may perform a variety of operations, such as placing a telephone call, playing various media, setting various camera features (e.g., focus, zoom, etc.) or accessing an application. Digital function keys **1240** may include a key that provides a cursor function and a select function.

Display **220** may include any component capable of providing visual information. For example, in one implementation, display **220** may be a liquid crystal display (LCD). In another implementation, display **220** may be any one of other display technologies, such as a plasma display panel (PDP), a field emission display (FED), a thin film transistor (TFT) display, etc. Display **220** may be utilized to display, for example, text, image, and/or video information. Display **220** may also operate as a view finder, as will be described later. Camera button **1260** may be a push-button that enables a user to take an image.

The touch panel device **110** is exemplary; the touch panel device **110** is intended to be broadly interpreted to include any type of electronic device. For example, the touch panel device **110** may include a communication device, such as a wireless telephone or a personal digital assistant (PDA), a computational device, such as a computer, an entertainment device, such as a game system, a stationary device, such as a security system, or any other type of device that includes a display. For example, the touch panel device **110** may be a navigation device, such as a global positioning system (GPS) device. Accordingly, although Figure 12 illustrates exemplary external components of the touch panel device **110,** in other implementations, the touch panel device **110** may contain fewer, different, or additional components than the components depicted in Figure 12. Additionally, or alternatively, one or more components of the touch panel device **110** may include the capabilities of one or more other external components of the touch panel device **110.** Additionally, or alternatively, the external may be arranged differently than the external components depicted in Figure 12.

In other instances, a user may access, using the touch panel device **110,** a function or service via a network (e.g., the Internet, a private network, a wireless network, a television network, etc.). For example, a user may visit a Web server to gain access to a credit card account, a banking account, an e-mail account, a video rental service account, etc. Accordingly, the concept described herein may be applied to various platforms and schemes.

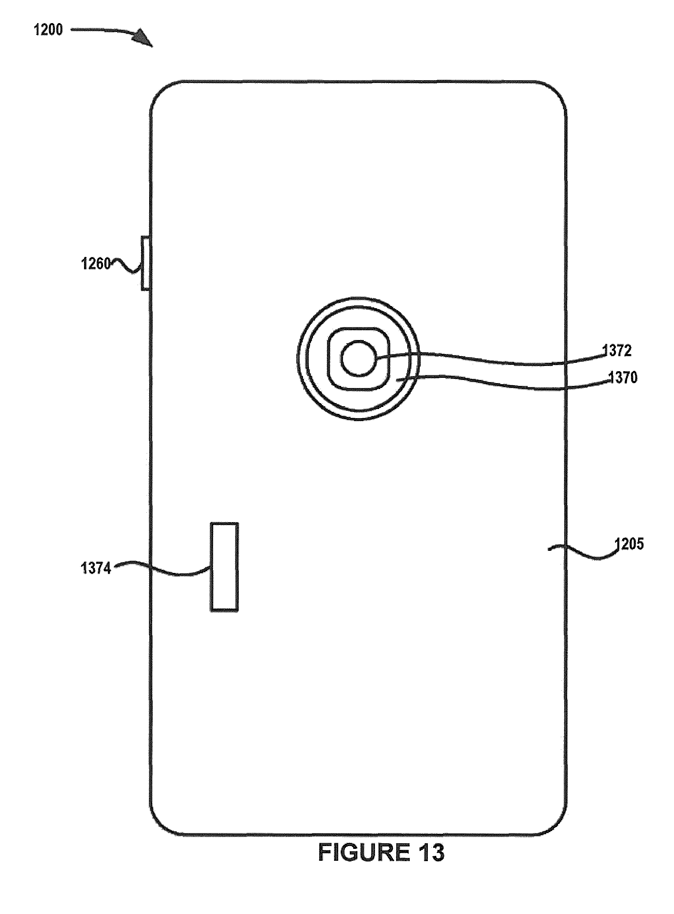

Figure 13 is a diagram illustrating a rear view of exemplary external components of the touch panel device **110** depicted in Figure 12. As illustrated, in addition to the components previously described, the touch panel device **110** may include a camera **1370,** a lens assembly **1372,** and a flash **1374.**

Camera **1370** may include any component capable of capturing an image. Camera **1370** may be a digital camera. Display **220** may operate as a view finder when a user of the touch panel device **110** operates camera **1370.** Camera **1370** may provide for automatic and/or manual adjustment of a camera setting. In one implementation, the touch panel device **110** may include camera software that is displayable on display **220** to allow a user to adjust a camera setting. For example, a user may be able adjust a camera setting by operating digital function keys **1240.**

Lens assembly **1372** may include any component capable of manipulating light so that an image may be captured. Lens assembly **1372** may include a number of optical lens elements. The optical lens elements may be of different shapes (e.g., convex, biconvex, plano-convex, concave, etc.) and different distances of separation. An optical lens element may be made from glass, plastic (e.g., acrylic), or plexiglass. In one implementation, lens assembly **1372** may be permanently fixed to camera **1370.** Lens assembly **1372** may provide for a variable aperture size (e.g., adjustable f-number).

Flash **1374** may include any type of light-emitting component to provide illumination when camera **1370** captures an image. For example, flash **1374** may be a light-emitting diode (LED) flash (e.g., white LED) or a xenon flash.

Although Figure 13 illustrates exemplary external components, in other implementations, the touch panel device **110** may include fewer, additional, and/or different components than the exemplary external components depicted in Figure 13. For example, the touch panel device **110** may not include camera **1370** and other components associated therewith. In still other implementations, one or more external components of the touch panel device **110** may be arranged differently.

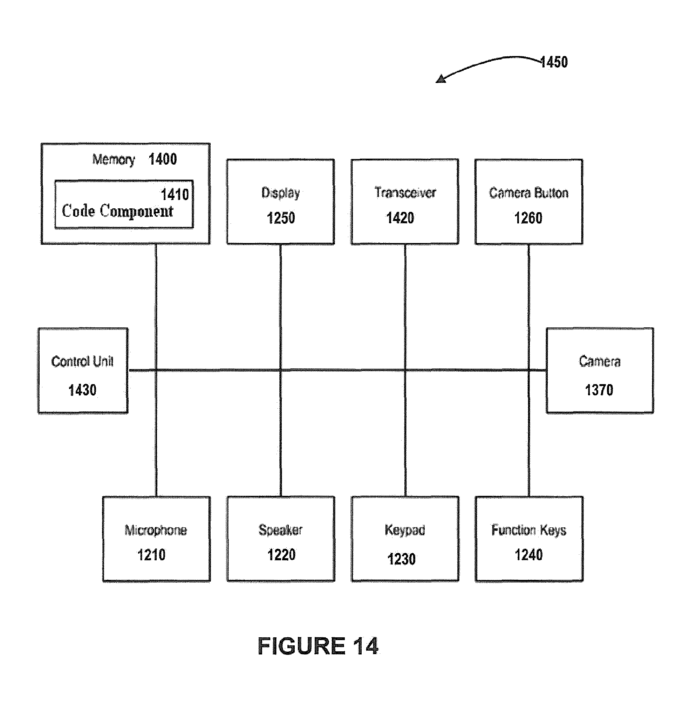

Figure 14 is a diagram **1450** illustrating exemplary internal components of the touch panel device **110** depicted in Figure 12. As illustrated, the touch panel device **110** may include microphone **1210,** speaker **1220,** display **220,** camera button **1260,** camera **1370,** a memory **1400,** a transceiver **1420,** digital keypad **1230,** digital function keys **1240,** and a control unit **1430.** No further description of microphone **1210,** speaker **1220,** display **220,** camera button **1260,** and camera **1370** is provided with respect to Figure 12.

Memory **1400** may include any type of storing component to store data and instructions related to the operation and use of the touch panel device **110.** For example, memory **1400** may include a memory component, such as a random access memory (RAM), a read only memory (ROM), and/or a programmable read only memory (PROM). Additionally, memory **1400** may include a storage component, such as a magnetic storage component (e.g., a hard drive) or other type of computer readable medium. Memory **1400** may also include an external storing component, such as a Universal Serial Bus (USB) memory stick, a digital camera memory card, and/or a Subscriber Identity Module (SIM) card.

Memory **1400** may include a code component **1410** that includes instructions to perform one or more functions. Any functions that are described as being performed by the touch panel device **110** may be understood as being performed by the code component **1410.** In some embodiments, the code component **1410** causes the touch panel device **110** to determine, with respect to a touch panel device, positional data associated with a user's first hand that interacts with the touch panel device. Additionally, the code component **1410** causes the touch panel device **110** to create an image of the user's first hand using the positional data. Additionally, the code component **1410** causes the touch panel device **110** to transmit the image of the user's first hand, via a transmission mechanism, to a display device. In some embodiments, the code component **1410** causes the touch panel device **110** to determine, with respect to the touch panel device, positional data associated with the user's second hand that interacts with the touch panel device based at least partially on the determining, with respect to a touch panel device, positional data associated with a user's first hand that interacts with the touch panel device. Additionally, in some embodiments, the code component **1410** causes the touch panel device **110** to identify a finger of the user's first hand or the user's second hand based at least partially on the determining, with respect to a touch panel device, positional data associated with a user's first hand that interacts with the touch panel device and the determining, with respect to the touch panel device, positional data associated with the user's second hand that interacts with the touch panel device. Code component **910** may include instructions to cause touch panel device **110** to provide other functionality other than as described herein.

Transceiver **1420** may include any component capable of transmitting and receiving information. For example, transceiver **1420** may include a radio circuit that provides wireless communication with a network or another device.

Control unit **1430** may include any logic that may interpret and execute instructions, and may control the overall operation of the touch panel device **110.** Logic, as used herein, may include hardware, software, and/or a combination of hardware and software. Control unit **1430** may include, for example, a general-purpose processor, a microprocessor, a data processor, a co-processor, and/or a network processor. Control unit **1430** may access instructions from memory **1400,** from other components of the touch panel device **110,** and/or from a source external to the touch panel device **110** (e.g., a network or another device).

Control unit **1430** may provide for different operational modes associated with the touch panel device **110.** Additionally, control unit **1430** may operate in multiple modes simultaneously. For example, control unit **1430** may operate in a touch panel mode, camera mode, a walkman mode, and/or a telephone mode. In one implementation, a user may prevent access of the touch panel device **110** by employing a security code.

Although Figure 14 illustrates exemplary internal components, in other implementations, the touch panel device **110** may include fewer, additional, and/or different components than the exemplary internal components depicted in Figure 14. For example, in one implementation, the touch panel device **110** may not include transceiver **1420.** In still other implementations, one or more internal components of the touch panel device **110** may include the capabilities of one or more other components of the touch panel device **110.** For example, transceiver **1420** and/or control unit **1430** may include their own on-board memory **1400.**

In accordance with embodiments of the invention, the term "module" with respect to a system (or a device) may refer to a hardware component of the system, a software component of the system, or a component of the system that includes both hardware and software. As used herein, a module may include one or more modules, where each module may reside in separate pieces of hardware or software.

Although many embodiments of the present invention have just been described above, the present invention may be embodied in many different forms and should not be construed as limited to the embodiments set forth herein; rather, these embodiments are provided so that this disclosure will satisfy applicable legal requirements. Also, it will be understood that, where possible, any of the advantages, features, functions, devices, and/or operational aspects of any of the embodiments of the present invention described and/or contemplated herein may be included in any of the other embodiments of the present invention described and/or contemplated herein, and/or vice versa. In addition, where possible, any terms expressed in the singular form herein are meant to also include the plural form and/or vice versa, unless explicitly stated otherwise. Accordingly, the terms "a" and/or "an" shall mean "one or more," even though the phrase "one or more" is also used herein. Like numbers refer to like elements throughout.

As will be appreciated by one of ordinary skill in the art in view of this disclosure, the present invention may include and/or be embodied as an apparatus (including, for example, a system, machine, device, computer program product, and/or the like), as a method (including, for example, a business method, computer-implemented process, and/or the like), or as any combination of the foregoing. Accordingly, embodiments of the present invention may take the form of an entirely business method embodiment, an entirely software embodiment (including firmware, resident software, micro-code, stored procedures in a database, etc.), an entirely hardware embodiment, or an embodiment combining business method, software, and hardware aspects that may generally be referred to herein as a "system." Furthermore, embodiments of the present invention may take the form of a computer program product that includes a computer-readable storage medium having one or more computer-executable program code portions stored therein. As used herein, a processor, which may include one or more processors, may be "configured to" perform a certain function in a variety of ways, including, for example, by having one or more general-purpose circuits perform the function by executing one or more computer-executable program code portions embodied in a computer-readable medium, and/or by having one or more application-specific circuits perform the function.

It will be understood that any suitable computer-readable medium may be utilized. The computer-readable medium may include, but is not limited to, a non-transitory computer-readable medium, such as a tangible electronic, magnetic, optical, electromagnetic, infrared, and/or semiconductor system, device, and/or other apparatus. For example, in some embodiments, the non-transitory computer-readable medium includes a tangible medium such as a portable computer diskette, a hard disk, a random access memory (RAM), a read-only memory (ROM), an erasable programmable read-only memory (EPROM or Flash memory), a compact disc read-only memory (CD-ROM), and/or some other tangible optical and/or magnetic storage device. In other embodiments of the present invention, however, the computer-readable medium may be transitory, such as, for example, a propagation signal including computer-executable program code portions embodied therein.

One or more computer-executable program code portions for carrying out operations of the present invention may include object-oriented, scripted, and/or unscripted programming languages, such as, for example, Java, Perl, Smalltalk, C++, SAS, SQL, Python, Objective C, JavaScript, and/or the like. In some embodiments, the one or more computer-executable program code portions for carrying out operations of embodiments of the present invention are written in conventional procedural programming languages, such as the "C" programming languages and/or similar programming languages. The computer program code may alternatively or additionally be written in one or more multi-paradigm programming languages, such as, for example, F#.

Some embodiments of the present invention are described herein with reference to flowchart illustrations and/or block diagrams of apparatus and/or methods. It will be understood that each block included in the flowchart illustrations and/or block diagrams, and/or combinations of blocks included in the flowchart illustrations and/or block diagrams, may be implemented by one or more computer-executable program code portions. These one or more computer-executable program code portions may be provided to a processor of a general purpose computer, special purpose computer, and/or some other programmable data processing apparatus in order to produce a particular machine, such that the one or more computer-executable program code portions, which execute via the processor of the computer and/or other programmable data processing apparatus, create mechanisms for implementing the steps and/or functions represented by the flowchart(s) and/or block diagram block(s).

The one or more computer-executable program code portions may be stored in a transitory and/or non-transitory computer-readable medium (e.g., a memory, etc.) that can direct, instruct, and/or cause a computer and/or other programmable data processing apparatus to function in a particular manner, such that the computer-executable program code portions stored in the computer-readable medium produce an article of manufacture including instruction mechanisms which implement the steps and/or functions specified in the flowchart(s) and/or block diagram block(s).

The one or more computer-executable program code portions may also be loaded onto a computer and/or other programmable data processing apparatus to cause a series of operational steps to be performed on the computer and/or other programmable apparatus. In some embodiments, this produces a computer-implemented process such that the one or more computer-executable program code portions which execute on the computer and/or other programmable apparatus provide operational steps to implement the steps specified in the flowchart(s) and/or the functions specified in the block diagram block(s). Alternatively, computer-implemented steps may be combined with, and/or replaced with, operator- and/or human-implemented steps in order to carry out an embodiment of the present invention.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations, modifications, and combinations of the just described embodiments can be configured without departing from the scope and spirit of the invention. Therefore, it is to be understood that, within the scope of the appended claims, the invention may be practiced other than as specifically described herein.

## Claims

1. A method comprising:
determining, with respect to a touch panel device, positional data associated with a user's first hand that interacts with the touch panel device;
creating an image of the user's first hand using the positional data; and
transmitting the image of the user's first hand to a display device, wherein the display device is separate from the touch panel device, wherein the image of the user's first hand is presented on the display device, and wherein the image of the user's first hand overlaps other visual information presented on the display device.

2. The method of claim 1, further comprising:
determining whether the user's first hand is a right hand or a left hand based on the determining positional data associated with the user's first hand that interacts with the touch panel device.

3. The method of claim 1, further comprising:
determining, with respect to the touch panel device, positional data associated with the user's second hand that interacts with the touch panel device.

4. The method of claim 3, further comprising:
identifying a finger of the user's first hand or the user's second hand based on the determining positional data associated with the user's first hand and the determining positional data associated with the user's second hand.

5. The method of claim 4, further comprising:
performing a function associated with the touch panel device based on the identifying a finger of the user's first hand or the user's second hand.

6. The method of claim 3, wherein the determining positional data associated with the user's first hand and the determining positional data associated with the user's second hand are executed using one or more sensors or one or more image capturing components associated with the touch panel device, wherein the touch panel device includes a display and a frame, and wherein one or more sensors sense interactions associated with the display and the frame.

7. The method of claim 1, wherein the user's first hand interacts with the touch panel device when the user performs at least one of: touching the touch panel device using the user's first hand, bringing the user's first hand in close proximity to the touch panel device, or grabbing the touch panel device using the user's first hand, wherein grabbing comprises touching at least a part of a front surface of the touch panel device using the user's first hand and touching at least a part of a back surface of the touch panel device using the user's first hand.

8. The method of claim 1, wherein the transmitting further comprises transmitting a continuous stream of images of the user's first hand, and wherein the presenting comprises presenting the continuous stream of images.

9. The method of claim 4, wherein the identifying further comprises identifying a part of the finger, wherein the identified part is at least one of: a top portion of the finger, a middle portion of the finger, or a bottom portion of the finger.

10. The method of claim 4, wherein the identifying is based at least partially on predetermined kinematic data or on data input by the user.

11. The method of claim 1, further comprising:
disabling the determining when the amount of determined positional data is greater than a predetermined threshold amount of positional data.

12. The method of claim 1, wherein the determining further comprises determining positional data associated with the user's first hand in response to one or more triggering events.

13. The method of claim 4, wherein the identifying is based at least partially on a software application that is executed on the touch panel device.

14. The method of claim 4, wherein the identifying is based at least partially on at least one of: a probability map associated with the touch panel device, or a ring associated with a finger.

15. The method of claim 4, wherein the identifying is based at least partially on at least one of: an orientation of the touch panel device or dimensions associated with the touch panel device.

16. The method of claim. 1, further comprising:
determining, using a sensor associated with the touch panel device, a pressure associated with an interaction, with the touch panel device, of a finger of the user's first hand; and
in response to determining the pressure associated with the interaction is greater than a threshold pressure, registering a touch event.

17. The method of claim 1, wherein the positional data includes positional data along the x-axis, the y-axis, and the z-axis with respect to the touch panel device surface.

18. The method of claim 1, further comprising:
determining an amount of energy remaining in a power source associated with the touch panel device, wherein an amount of positional data determined by the touch panel device is based partially on the amount of energy remaining in the power source.

19. A system comprising:
a touch panel device that comprises a memory and a processor;
a module stored in the memory, executable by the processor, and configured to:
determine, with respect to the touch panel device, positional data associated with a user's first hand that interacts with the touch panel device; and
transmit the positional data to the display device, wherein an image of the user's first hand is created at the display device using the positional data, wherein the display device is separate from the touch panel device, wherein the image of the user's first hand is presented on the display device, and wherein the image of the user's first hand overlaps other visual information presented on the display device.

20. A computer program product comprising:
a non-transitory medium comprising a set of codes that cause a computer to:
determine, with respect to a touch panel device, positional data associated with a user's first hand that interacts with the touch panel device;
create an image of the user's first hand using the positional data; and
transmit the image of the user's first hand to a display device, wherein the display device is separate from the touch panel device, wherein the image of the user's first hand is presented on the display device, and wherein the image of the user's first hand overlaps other visual information presented on the display device.
